# EUROPEAN PATENT SPECIFICATION

(11) **EP 0 533 161 B1**
(45) Date of publication and mention of the grant of the patent: **03.12.1997**
(21) Application number: 92115933.1
(22) Date of filing: 17.09.1992
(51) Int. Cl.: F16J 15/14, C08J 5/00, C09K 3/10

(54) **Gasket with sealing layer**
Dichtung mit Abdichtungsschicht
Joint avec couche d'étanchéité

(30) Priority: 20.09.1991 JP 270024/91; 20.09.1991 JP 270025/91; 17.07.1992 JP 213797/92
(43) Date of publication of application: 24.03.1993
(73) Proprietor: Nippon Reinz Co.,Ltd., Yamato-shi Kanagawa-ken (JP)
(72) Inventor: Yamamoto, Kengo, c/o NIPPON REINZ CO., LTD., Yamato-shi, Kanagawa (JP); Nakao, Sadao, c/o NIPPON REINZ CO., LTD., Yamato-shi, Kanagawa (JP)
(74) Representative: Grünecker, Kinkeldey, Stockmair & Schwanhäusser Anwaltssozietät

(56) References cited:
- EP-A- 0 152 179
- EP-A- 0 188 778
- EP-A- 0 250 057
- US-A- 4 691 928
- DATABASE WPIL Section Ch, Week 8810, Derwent Publications Ltd., London, GB; Class A88, AN 88-066504 & JP-A-63 017 983 (NIPPON REINZ KK)
- DATABASE WPIL Section Ch, Week 9014, Derwent Publications Ltd., London, GB; Class A89, AN 90-103443 & JP-A-2 054 444 (MATSUSHITA ELEC IND KK)

## Description

### FIELD OF THE INVENTION

This invention relates to a gasket excellent in sealing properties and production efficiency which is suitable for various industrial uses.

### BACKGROUND OF THE INVENTION

It has been proposed to provide a sealing layer on a gasketing base layer for improving conformability and sealing properties without forming clearance. Conventionally proposed sealing layers include a silicone rubber layer provided via a primer coating layer. A primer coating layer, which is for enhancement of adhesion between a gasketing base layer and the silicone rubber layer, is formed by coating a primer solution of a thermoplastic resin, e.g., polyvinyl butyral, or an acrylic silicone resin, in a solvent, e.g., ethanol or methyl ethyl ketone, on a gasketing base layer by screen coating.

However, the solvent of the primer solution is vaporized during screen coating to cause clogging of the screen. Further, the wet primer coating layer needs lots of energy and time for drying and hardening, causing a reduction of gasket production efficiency. If a high-boiling solvent is used in the primer solution, the screen coating properties may be improved, but this also results in an increase of energy or time required for drying, etc., eventually failing to improve the overall production efficiency.

In order to overcome the problem of the primer coating layer, it has also been proposed to efficiently form a sealing layer by use of an ultraviolet-curing polymer as disclosed in JP-A-63-17982, JP-A-63-17983, and JP-A-63-72971 (the term "JP-A" as used herein means an "unexamined published Japanese patent application"). However, since the use of a hard type ultraviolet-curing polymer must be avoided so that the sealing layer may have a soft finish to exhibit conformability, the surface of the resulting sealing layer shows tack to interfere with successive operations.

The most pertinent prior art is disclosed in EP-A-0188778 relating to an impregnated gasket, in particular cylinder head gasket for internal combustion engines. Said prior art document proposes a technique of using a silicone resin as an impregnating agent for the gasket sheet by thermosetting and further ultraviolet curing. Said document, furthermore, proposes that a coating layer of ultraviolet hardenable polymers or solid particles substances may be applied to the impregnated gasket after furnace heating and before ultraviolet hardening. The silicone impregnated agent which is present in surface regions of the flat sealing gasket is cross-linked to a greater degree than obtainable by thermal treatment alone.

It is an object of the present invention to provide an improved gasket having efficiently formed thereon a tack-free (non-tackiness) sealing layer.

The above object is achieved by the subject matter of claim 1.

Preferred embodiments and further improvements of the invention are defined in the depending subclaims.

The present invention is explained in the following with reference to the drawings:

Figures 1-3 each show a cross-section of gaskets out of the scope of the present invention.

Figure 4 is a cross-section of a gasketing base layer.

Figure 5 is a cross section of a sealing layer according to the present invention.

Figure 6 illustrates an embodiment of usage of the gasket according to the present invention.

### DETAILED DESCRIPTION OF THE INVENTION

In the gasket according to the present invention, a sealing layer comprises a surface layer and at least one ultraviolet-cured layer via which it is adhered to a gasketing base layer. Therefore, the sealing layer can be formed with good adhesion to the gasketing base layer, and the problem of screen clogging as observed in the case of forming a primer coating layer can be avoided. Besides, the time required for curing can be reduced to about 5 seconds whereas the conventional hardening by drying requires about 15 minutes, which brings about not only increased efficiency but energy saving, ultimately leading to increased overall efficiency of gasket production.

Since the surface layer of the sealing layer is tack-free, disadvantages due to adhesion of gaskets with each other, such as interference with successive operations and adhesion to the block side or head side of an engine, can be avoided. Further, the sealing layer having a Shore hardness A of from 10 to 80, a compressibility of from 10 to 90%, and a recovery of not less than 30% is excellent in surface conformability and sealing properties (properties to prevent clearance formation).

In the present invention, Shore hardness A is measured according to JIS K6301 in the title of "Physical Test Method for Vulcanized Rubber" and compressibility and recovery each are measured according to JIS R3453 in the title of "Asbestos Joint Sheet".

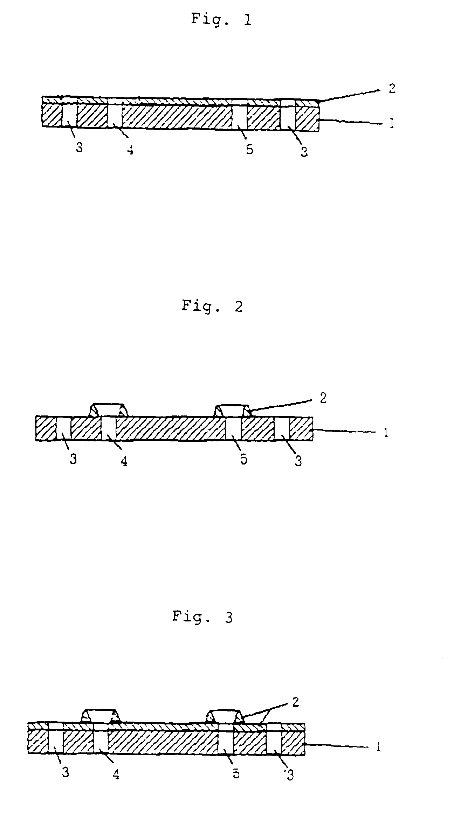

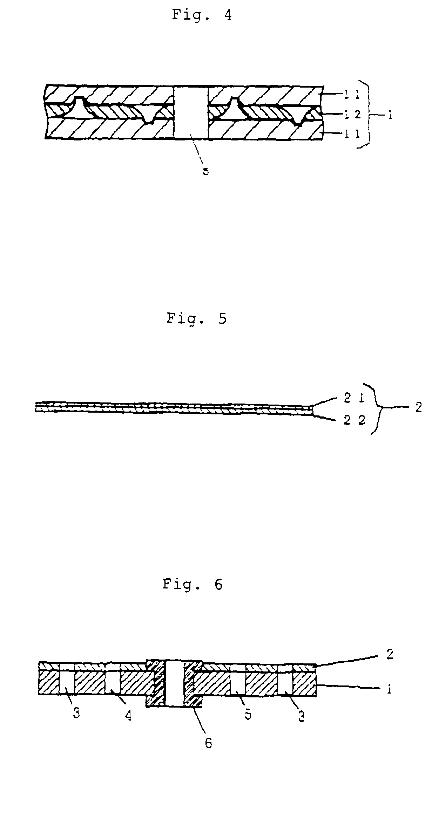

Examples of gaskets are illustrated in Figs. 1 to 3 and 6, in which numeral 1 is a gasketing base layer and numeral 2 is a sealing layer.

The gasketing base layer is not particularly limited. Any of known gasketing profiles, such as those used in internal combustion engines, particularly automobile engines, may be used. General gasketing profiles include fibrous sheets comprising a mixture of a fibrous component, e.g., inorganic and/or organic high-temperature-resistant fibers or fabrications thereof, and a rubber component, e.g., natural rubber or synthetic rubbers (e.g., styrene-butadiene rubber (SBR), acrylonitrile-butadiene rubber (NBR), acrylic rubber), such as joint sheet, beater sheet, and steel sheet wherein asbestos-free compounds are coated on both sides thereof; graphite sheet; and metallic sheet, such as rubber-coated metal sheet.

The gasketing base layer may have a single layer structure as shown in Fig. 1, which comprises, for example, the above-mentioned mixture of a fibrous component and a rubber component; a structure as shown in Fig. 4, which is obtained by calandering the above-described mixture of a fibrous component and a rubber component in both sides of perforated iron plate 12 to form layers 11; or a laminate structure composed of a core, e.g., the perforated iron plate as illustrated in Fig. 4 or a flat iron plate, sandwiched in between a pair of the above-described fibrous sheet or graphite sheet. In Figures 1 to 3 and 6, numerals 3, 4, and 5 indicate through-holes which functions as passageways of water, oil, etc. or as bolt holes.

The sealing layer has a multilayer structure and contains at least an ultraviolet-cured layer as an integral part thereof via which it is bonded to gasketing base layer 1. That is, the sealing layer 1 has a double layer structure composed of an ultraviolet-cured layer 22 having formed thereon a surface layer 21 as shown in Fig. 5 or three or more layers.

The ultraviolet-cured layer is formed by using an appropriate ultraviolet-curing polymer, such as acrylic epoxy polymer, acrylic polyester polymer, acrylic urethane polymer, acrylic polyether polymer, acrylic polythiol polymer, and epoxy polymer.

Among these ultraviolet-curing polymers, preferred are those providing a soft cured layer from the standpoint of sealing performance properties, such as surface conformability. Acrylic urethane polymer is particularly preferred and this polymer provides a sealing layer excellent in water resistance, oil resistance, and the like. Examples of ultraviolet-curing acrylic urethane polymer include polyether polyol, polyester polyol, and polymers containing an ether group and an ester group per molecule.

Specific examples of the polyether polyol are polyethylene glycol, polypropylene glycol, polytetramethylene glycol, 1,3-butylene glycol, 1,4-butylene glycol, 1,6-hexanediol, neopentyl glycol, cyclohexanedimethanol, 2,2-bis(4-hydroxycyclohexyl)propane, and ethylene oxide- or propylene oxide-added bisphenol A.

Specific examples of the polyester polyol include reaction products between one or more of the above-enumerated polyether polyol and a dibasic acid, e.g., adipic acid, sebacic acid, azelaic acid, and dodecanedicarboxylic acid, or an anhydride thereof.

Diisocyanate to be used in the formation of acrylic urethane polymer includes aromatic diisocyanate, e.g., tolylene diisocyanate and 4,4'-diphenylmethane diisocyanate; alicyclic diisocyanate, e.g., isoboron diisocyanate and 4,4'-dicyclohexylmethane diisocyanate; and aliphatic diisocyanate, e.g., hexamethylene diisocyanate and 2,2'-trimethylhexamethylene diisocyanate.

Hydroxyl-containing polymerizable monomers to be used include hydroxyl-containing methacrylates, e.g., β-hydroxyethyl methacrylate, β-hydroxypropyl methacrylate, β-hydroxylauryl methacrylate, and ε-caprolactone-β-hydroxyethyl methacrylate.

These ultraviolet-curing acrylic urethane polymer are commercially available under trade names of "ZF-418-11" and "ZH-353T" (produced by Nippon Zeon Co., Ltd.), "BYX-8017" (produced by Asahi Denka Kogyo K.K.), and "XNR-5470" (produced by Nagase Ciba Co., Ltd.).

If desired, the ultraviolet-curing polymer may contain appropriate additives, such as silica, coupling agents, and colorants. Silica and coupling agents are effective to improve resistance to high temperature and high pressure or resistance to settling. Incorporation of these additives is therefore advantageous in production of gaskets required to have good stress relaxation properties, water resistance, and oil resistance, for an extended period of use, such as cylinder head gaskets of automobile engines, etc. which are used in a high temperature and a high pressure and also in contact with water or oil.

Silica to be used has an average particle size preferably of not more than 30 µm, more preferably of not more than 20 µm, and most preferably of from 0.1 to 10 µm. Commercially available silica which can be used in the present invention include "Nipsil VN-3" (produced by Nippon Silica Kogyo K.K.) and "Aerosil 200" (produced by Nippon Aerosil K.K.).

Silica is added in an amount usually of from 2 to 50 parts by weight, and preferably of from 5 to 30 parts by weight, per 100 parts by weight of the ultraviolet-curing polymer. A lower level of addition (i.e., less than 2 parts by weight) produces no sufficient effects to improve resistance to high temperature and high pressure or resistance to settling. A higher level of addition (i.e., more than 50 parts by weight) sometimes results in formation of a sealing layer having poor water resistance and poor oil resistance.

Coupling agents which can be used in the present invention include silane coupling agents and titanium coupling agents. Examples of suitable silane coupling agents are γ-aminopropyltriethoxysilane, γ-mercaptopropyltrimethoxysilane, and N-β(aminoethyl)-γ-aminopropylmethyldimethoxysilane. These silane coupling agents are commercially available under trade names of KBE 903, KBM 803, and KBM 603, all produced by Shin-Etsu Chemical Co., Ltd. Examples of suitable titanium coupling agents include isopropyltriisostearoyl titanate. Such a titanium coupling agent is commercially available under a trade name, e.g., of "TTS", produced by Ajinomoto Co., Inc. Preferred of these coupling agents are silane coupling agents, and particularly γ-aminopropyltriethoxysilane and γ-mercaptopropyltrimethoxysilane.

The coupling agent is added in an amount usually of from 0.1 to 10 parts by weight, and preferably of from 0.2 to 3 parts by weight, per 100 parts by weight of the ultraviolet-curing polymer. A lower level of addition is insufficient for fixing of silica, and a higher level of addition brings about no substantial increase of the effect. The coupling agent may previously be supplied as a surface treating agent for silica.

Colorants are added aiming at discrimination of the sealing layer because a sealing layer, if transparent, is hard to distinguish particularly when provided in parts and tends to reduce the production efficiency. Colorants useful for this purpose include various dyes or pigments of arbitrary color. Commercially available colorants which can be used include "Quinate 50R-406" (red), "Quinate FTNZ408" (orange), and "Quinate 508L" (blue), all produced by Nippon Zeon Co., Ltd.

The colorant is added in an amount usually of from 0.01 to 0.5 part by weight, and preferably from 0.02 to 0.2 part by weight, per 100 parts by weight of the ultraviolet-curing polymer. A lower level of addition produces only a poor coloring effect, and a higher level of addition is liable to reduce ultraviolet curing properties.

Other usable additives or compounds which may be incorporated into the ultraviolet-curing polymer include photopolymerization initiators, photopolymerizable monomers, sensitizers, and stabilizers.

Examples of suitable photopolymerization initiators are acetophenone, benzophenone, Michler's ketone, benzil, benzoin, benzoin ether, and benzyl dimethyl ketal.

Photopolymerizable monomers may be added for the purpose of improving properties of the sealing layer containing an ultraviolet-cured layer. Examples of suitable photopolymerizable monomers include monofunctional monomers, e.g., methyl methacrylate, ethyl methacrylate, 2-ethylhexyl acrylate, 2-hydroxyethyl acrylate, and 2-hydroxypropyl acrylate; bifunctional monomers, e.g., 1,3-butanediol diacrylate, 1,4-butanediol diacrylate, 1,6-hexanediol diacrylate, diethylene glycol diacrylate, neopentyl glycol diacrylate, polyethylene glycol diacrylate, and hydroxypivalic ester neopentyl glycol diacrylate; and tri- or polyfunctional monomers, e.g., trimethylolpropane triacrylate, pentaerythritol triacrylate, dipentaerythritol hexaacrylate, and polymethylolpropane polyacrylate.

The ultraviolet-cured layer can be formed by coating the above-described ultraviolet-curing polymer or a solution thereof on a prescribed area of a gasketing base layer by screen coating, roll coating, curtain coating, dispenser coating, spray coating, or the like coating technique, followed by curing with ultraviolet rays. The ultraviolet irradiation dose is selected appropriately within a range of generally from 80 to 500 mJ/cm².

The stratified structure of a sealing layer is adopted since a single ultraviolet-cured layer on a gasketing base layer may not be sufficient for satisfying the above-described specific requirements, i.e., surface non-tackiness, a Shore hardness A of 10 to 80, a compressibility of 10 to 90%, and a recovery of 30% or more. The surface layer which is stratified on the ultraviolet-cured layer on a gasketing base layer to provide a stratified sealing layer includes an ultraviolet-cured layer, a rubber layer, a resin layer, and a releasable inorganic powder-containing layer.

The ultraviolet-cured surface layer to be stratified is preferably formed by using acrylic epoxy polymer, acrylic polyester polymer, acrylic polyether polymer, and epoxy polymer from the standpoint of surface non-tackiness. In particular, acrylic epoxy polymer and epoxy polymer are preferred. Commercially available acrylic epoxy polymer, such as "XNR 5460" and "XNR 5460 TC", both produced by Nagase Ciba Co., Ltd.; and commercially available epoxy polymer, such as "KS-830" and "KS-820", both produced by Asahi Denka Kogyo K.K., may be employed. Stratification of the ultraviolet-cured surface layer is advantageous in terms of production efficiency as the whole sealing layer can be formed from ultraviolet-curing polymers. The tack-free ultraviolet-cured surface layer preferably has a thickness of from 2 to 10 µm from the viewpoint of preventing reduction in conformability.

The rubber layer, resin layer, or releasable inorganic powder-containing layer to be stratified on the ultraviolet-cured layer may be formed by using rubbers, such as natural rubber; synthetic rubbers, e.g., SBR, NBR, acrylic rubber, silicone rubber, and fluorine rubber; resins, such as epoxy resin, epoxy silicone resin, acrylic silicone resin, silicone resin, and fluorine resin; or releasable inorganic powders, such as talc, clay, and calcium carbonate.

While the layer to be stratified on the ultraviolet-cured layer has been described above as a surface layer for making the surface of the sealing layer tack-free, it may also serve as an intermediate layer. In particular, the above-described rubbers or resins capable of forming a layer having a Shore hardness A of 10 to 80, a compressibility of 10 to 90%, and a recovery of 30% or more are useful for forming an intermediate layer for preference. Of the rubbers useful for rendering the surface of a sealing layer tack-free, silicone rubber is particularly preferred. The silicone rubber to be used may be any of room temperature setting or thermosetting rubbers of addition type or condensation type. These silicone rubbers are commercially available under trade names of "CY52-237", produced by Toray Dow Corning Co., Ltd. and "X32-1134" and "KE-1083", both produced by Shin-Etsu Chemical Co., Ltd. The releasable inorganic powder-containing layer may comprise a binder resin having dispersed therein the inorganic powder.

The sealing layer may be provided on desired part of a gasketing base layer, for example, on the entire surface of one or both sides of a gasketing base layer and/or on the part surrounding through-holes as illustrated in Figures. Where terminal fittings, such as grommet 6 and eyelet, etc., are fitted into the through-holes as illustrated in Fig. 6, the fittings may protrude from the level of sealing layer 2. Further, sealing layer 2 may or may not be in contact with the end of the fittings or may cover the flange of the fittings.

The thickness of the sealing layer is arbitrary and usually ranges from 5 to 500 µm, preferably from 10 to 200 µm, and more preferably from 20 to 150 µm. In the stratified structure, the thickness of the ultraviolet-cured layer via which the sealing layer is adhered to a gasketing base layer is suitably from 2 to 30 µm, and preferably from 3 to 15 µm from the viewpoint of thinness and adhesive strength, and that of the layer laminated thereon for endowing the sealing layer with non-tackiness is preferably as thin as possible, and particularly not more than 10 µm.

Where the formation of a sealing layer involves a heat treatment as required in the case of using a silicone rubber, etc., it is possible to choose an ultraviolet-curing and heat-curing polymer for the formation of an ultraviolet-cured layer. Such being the case, curing of the ultraviolet-curing polymer can be carried out by heat treatment for the silicone rubber, etc.

The gasket according to the present invention is applicable to various industrial fields, such as in automobile engines. In particular, it is utilized as a cylinder head gasket or a gasket around engine where a gasket is exposed to high temperature and high pressure or as a gasket around transmission in which water or oil takes part.

Since the sealing layer of the gasket of the present invention comprises an ultraviolet-curing polymer, a sealing layer having excellent adhesion to a gasketing base layer can be formed with reduced energy at high efficiency without causing clogging of a screen in screen printing. Further, since the sealing layer has no tackiness, unfavorable adhesion due to tack can be avoided. Accordingly, the gasket of the present invention is easy to handle and is excellent in surface conformability, sealing properties, and production efficiency.

The present invention is now illustrated in greater detail with reference to Examples, but it should be understood that only the multi-layer structures are sought to be protected. All the parts and percents are by weight unless otherwise indicated.

### Preparation of Gasketing Base Layer 1

A mixture consisting of 100 parts, on solid basis, of NBR ("Nipol LX 513" produced by Nippon Zeon Co., Ltd.), 100 parts of aromatic polyamide fiber ("Kevlar 29" produced by Du Pont Ltd.), 150 parts of rock wool ("MF" produced by Nihon Cement Co., Ltd.), 300 parts of talc ("Talc SW" produced by Nippon Talc Co., Ltd.), 350 parts of soft clay ("Neocarriers K" produced by Asada Seifun K.K.), 5 parts of a vulcanizing agent (sulfur produced by Hosoi Kagaku K.K.), and 5 parts of a vulcanization accelerator ("Nocceler TT" produced by Ouchi Shinko Chemical Industrial Co., Ltd.) was coated on both sides of a 0.25 mm thick perforated iron plate by calendering and vulcanized by heating. The resulting sheet was cut out into a ring having an outer diameter of 75 mm and an inner diameter of 55 mm to obtain 1.25 mm thick gasketing base layer 1.

### Preparation of Gasketing Base Layer 2

Gasketing base layer 2 was prepared in the same manner as in the preparation of gasketing base layer 1, except for replacing NBR with 100 parts of an acrylic rubber ("Noxtite A-1095" produced by Nippon Mektron Co., Ltd.) and Noccelar TT with 5 parts of Noccelar H (produced by Ouchi Shinko Chemical Industrial Co., Ltd.).

### Preparation of Gasketing Base Layer 3

A 0.75 mm thick carbon sheet obtained by pressing expanded graphite (a product of Nippon Carbon Co., Ltd.) was laminated to both sides of a 0.25 mm thick perforated iron plate, and the laminated sheet was cut out in the same manner as in the preparation of gasketing base layer 1 to obtain gasketing base layer 3.

### Preparation of Gasketing Base Layer 4

A rubber coated metal plate comprising a 0.25 mm thick zinc-plated iron plate having on both sides thereof a 50 µm thick NBR coat (a product of Sanshin Kogyo K.K.) was cut out in the same manner as in the preparation of gasketing base layer 1 to obtain 0.35 mm thick gasketing base layer 4.

### EXAMPLE 1

An ultraviolet-curing polyurethane acrylate ("ZF-418-11" produced by Nippon Zeon Co., Ltd.) was screen printed on the central portion of the ring width of gasketing base layer 1 and cured by irradiating ultraviolet rays for about 30 seconds to form a transparent ultraviolet-cured layer having a width of 2 mm and a thickness of 200 µm. The transparent ultraviolet-cured layer had a Shore hardness of 39 on the A scale, a compressibility of 46.2% and a recovery of 53.9%. An acrylic epoxy polymer ("XNR 5460" produced by Nagase Ciba Co., Ltd.) was then screen printed on the ultraviolet-cured layer and cured by irradiating ultraviolet rays for about 10 seconds to form a tack-free surface layer having a thickness of 3 µm to obtain a gasket having a double-layered sealing layer.

### EXAMPLE 2

A gasket having a double-layered sealing layer was obtained in the same manner as in Example 1, except for replacing the ultraviolet-curing polyurethane acrylate with a coating composition consisting of 100 parts of an ultraviolet-curing polyurethane acrylate ("ZH-353T" produced by Nippon Zeon Co., Ltd.), 20 parts of silica powder ("Nipsil VN-3" produced by Nippon Silica Kogyo K.K.), 1 part of a silane coupling agent ("KBE 903" produced by Shin-Etsu Chemical Co., Ltd.), and 0.1 part of a colorant ("Quinate 50BL" produced by Nippon Zeon Co., Ltd.) to form a colored ultraviolet-cured layer. The ultraviolet-cured layer had a Shore hardness of 70 on the A scale, a compressibility of 24.6% and a recovery of 78.4%.

### EXAMPLE 3

A gasket having a double-layered sealing layer was obtained in the same manner as in Example 1, except for using gasketing base layer 2 and replacing the ultraviolet-curing polyurethane acrylate with a coating composition consisting of 100 parts of an ultraviolet-curing polyurethane acrylate ("XNR-5470" produced by Nagase Ciba Co., Ltd.), 10 parts of silica powder ("Aerosil 200" produced by Nippon Aerosil Co., Ltd.), 0.3 part of a silane coupling agent ("KBE 803" produced by Shin-Etsu Chemical Co., Ltd.), and 0.2 part of a colorant ("Quinate 50R-406" produced by Nippon Zeon Co., Ltd.) to form a colored ultraviolet-cured layer. The ultraviolet-cured layer had a Shore hardness of 67 on the A scale, a compressibility of 28.8% and a recovery of 73.3%.

### EXAMPLE 4

A gasket having a double-layered sealing layer was obtained in the same manner as in Example 2, except for using gasketing base layer 3.

### EXAMPLE 5

A gasket having a double-layered sealing layer was obtained in the same manner as in Example 2, except for using gasketing base layer 4.

### EXAMPLE 6

A gasket having a double-layered sealing layer was obtained in the same manner as in Example 1, except for replacing the acrylic epoxy polymer with an epoxy polymer ("KS-830" produced by Asahi Denka Kogyo K.K.) to form a tack-free surface layer.

### EXAMPLE 7

A gasket having a double-layered sealing layer was obtained in the same manner as in Example 1, except for replacing the acrylic epoxy polymer with a releasable powder (talc) to form a tack-free surface layer.

### EXAMPLE 8

An ultraviolet-curing epoxy polymer ("KS-830" produced by Asahi Denka Kogyo K.K.) was screen printed on the central portion of the ring width of gasketing base layer 1 and cured by irradiating ultraviolet rays for about 5 seconds to form an ultraviolet-cured layer having a width of 2 mm and a thickness of 5 µm. A silicone rubber ("KE-1083" produced by Shin-Etsu Chemical Co., Ltd., wherein the Shore hardness is 54 on the A scale, compressibility is 30.5%, and recovery is 72.1%) was then screen printed on the ultraviolet-cured layer and cured by heating at 150°C for about 15 minutes to form a 200 µm thick rubber layer to obtain a gasket having a double-layered sealing layer.

### EXAMPLE 9

A gasket having a double-layered sealing layer was obtained in the same manner as in Example 8, except for using gasketing base layer 2 and forming the ultraviolet-cured layer to a thickness of 10 µm.

### EXAMPLE 10

A gasket having a double-layered sealing layer was obtained in the same manner as in Example 8, except for using gasketing base layer 3, and replacing the ultraviolet-curing epoxy polymer to an ultraviolet-curing acrylic epoxy polymer ("XNR 5460" produced by Nagase Ciba Co., Ltd.).

### COMPARATIVE EXAMPLE 1

A gasket was obtained in the same manner as in Example 1, except that the tack-free surface layer was not formed.

### COMPARATIVE EXAMPLE 2

A gasket was obtained in the same manner as in Example 8, except that the ultraviolet-cured layer was not formed.

### COMPARATIVE EXAMPLE 3

A gasket was obtained in the same manner as in Example 8, except for using gasketing base layer 3 and replacing the ultraviolet-cured layer with a 2 µm thick primer coat (width: 2 mm) which was formed by screen coating a 30% ethanol solution of polyvinyl butyral on the central portion of the ring width, followed by heating at 80°C for about 3 minutes.

The gaskets obtained in the foregoing Examples and Comparative Examples were evaluated according to the following test methods. The results obtained are shown in Table 1 below.

### (1) Surface Tackiness:

Tack to the touch of the surface of each of the gaskets of Examples 1 to 7 and Comparative Example 1 was examined.

### (2) Adhesive Strength:

The adhesive strength of the sealing layer of each of the gaskets of Examples 8 to 10 and Comparative Examples 2 and 3 was measured by peel test at a peel angle of 90° and a peeling speed of 150 mm/min.

### (3) Water Sealing Properties:

The ring gasket was clamped from both sides under a pressure of 50 kg/cm². The inner water pressure was stepwise raised by 0.5 kg/cm² starting from 0.5 kg/cm², and the testing system was kept for 15 minutes for every rise of inner water pressure. The inner water pressure at which water leakage was observed with the naked eye was measured.

Further, the same test was conducted, except that the clamped gasket was heat treated at 220°C for 22 hours followed by cooling to room temperature, and then the inner water pressure was stepwise raised.

### (4) Oil Sealing Properties:

The ring gasket was tested in the same manner as in (3) above, except for replacing water to JIS No. 3 oil.

**TABLE 1**

| Example No. | Tackiness | Adhesive Strength | Sealing Properties (kg/cm²) | | | |
|---|---|---|---|---|---|---|
| | | (g/2 mm) | Non-heated | | Heated | |
| | | | Water Leak | Oil Leak | Water Leak | Oil Leak |
| Example 1 | tack-free | | >10.0 | >20.0 | 3.5 | 5.5 |
| Example 2 | tack-free | | >10.0 | >20.0 | 9.5 | 18.5 |
| Example 3 | tack-free | | 9.0 | >20.0 | 8.0 | 17.5 |
| Example 4 | tack-free | | >10.0 | >20.0 | 10.0 | 19.0 |
| Example 5 | tack-free | | >10.0 | >20.0 | 9.0 | 18.0 |
| Example 6 | tack-free | | >10.0 | >20.0 | 3.5 | 5.5 |
| Example 7 | tack-free | | >10.0 | >20.0 | 3.5 | 5.5 |
| Example 8 | | 85.0 | >10.0 | >20.0 | 9.0 | 18.0 |
| Example 9 | | 83.0 | >10.0 | >20.0 | 8.5 | 17.5 |
| Example 10 | | 60.0 | >10.0 | >20.0 | 9.5 | 18.5 |
| Compara. Example 1 | tacky | | >10.0 | >20.0 | 3.5 | 5.5 |
| Compara. Example 2 | | 10.0 | >10.0 | >20.0 | 9.0 | 18.0 |
| Compara. Example 3 | | 45.0 | >10.0 | >20.0 | 8.5 | 17.5 |

## Claims

1. A gasket comprising a gasketing base layer (1) and a sealing layer (2) disposed on at least one part of a surface of the gasketing base layer, said sealing layer (2) having a multi-layer structure comprising at least one ultraviolet-cured layer (22) via which it is bonded to the gasketing base layer (1) and further comprising a surface layer (21) of which the outer surface is tack-free, said sealing layer having a shore hardness of from 10 to 80 on the A scale, a compressibility of from 10 to 90%, and a recovery of not less than 30%.

2. A gasket as claimed in claim 1, wherein said surface layer (21) comprises a silicone rubber.

3. A gasket as claimed in claim 1, wherein said surface layer (21) comprises a releasable inorganic powder.

4. A gasket as claimed in claim 1, wherein said surface layer (21) is an ultraviolet-cured layer.

5. A gasket as claimed in claim 1, wherein said surface layer (21) is a resin layer.

6. A gasket as claimed in one of the preceding claims 1-5, wherein said ultraviolet-cured layer (22) comprises an ultraviolet-curing polymer which is a member selected from the group consisting of acrylic epoxy polymer, acrylic polyester polymer, acrylic urethane polymer, acrylic polyether polymer, acrylic polythiol polymer, and epoxy polymer.

7. A gasket as claimed in one of the preceding claims 1-6, wherein said ultraviolet-curing layer (21) comprises appropriate additives, such as silica, coupling agents and colorants.

8. A gasket as claimed in claim 7, wherein the silica to be used has an averaged particles size of not more than 30 µm more preferably of not more than 20 µm and most preferably of from 0.1-10 µm, wherein said silica is added in an amount of from 2-50 parts per weight, and preferably of from 5-30 parts per weight, per 100 parts per weight of the ultraviolet-curing polymer.

9. A gasket as claimed in claim 7, wherein the coupling agents to be used include silane coupling agents and titanium coupling agents which are added in an amount of from 0.1-10 parts per weight, and preferably of from 0.2-3 parts per weight per 100 parts per weight of the ultraviolet-curing polymer.

10. A gasket as claimed in claim 7, wherein the colorant is added in an amount of from 0.01-0.5 parts per weight, and preferably from 0.02-0.2 parts per weight, per 100 parts per weight of the ultraviolet-curing polymer.

## Patentansprüche

1. Dichtung mit einer Abdichtungsgrundschicht (1) und einer Abdichtungsschicht (2), die an wenigstens einem Teil einer Oberfläche der Abdichtungsgrundschicht angeordnet ist, wobei die Abdichtungsschicht (2) einen mehrschichtigen Aufbau aufweist, der wenigstens eine ultraviolettgehärtete Schicht (22) umfaßt, mittels welcher dieser mit der Abdichtungsgrundschicht (1) verbunden ist, und außerdem eine Oberflächenschicht (21) aufweist, deren äußere Oberfläche nicht klebrig ist, wobei die Abdichtungsschicht eine Shore-A-Härte von 10 bis 80, eine Kompressibilität von 10 bis 90 % und ein Rückstellvermögen von nicht weniger als 30 % aufweist.

2. Dichtung nach Anspruch 1, **dadurch gekennzeichnet,** daß die Oberflächenschicht (21) einen Silikongummi aufweist.

3. Dichtung nach Anspruch 1, **dadurch gekennzeichnet,** daß die Oberflächenschicht (21) ein ablösbares anorganisches Pulver aufweist.

4. Dichtung nach Anspruch 1, **dadurch gekennzeichnet,** daß die Oberflächenschicht (21) eine ultraviolettgehärtete Schicht ist.

5. Dichtung nach Anspruch 1, **dadurch gekennzeichnet,** daß die Oberflächenschicht (21) eine Harzschicht ist.

6. Dichtung nach einem der Ansprüche 1-5, **dadurch gekennzeichnet,** daß die ultravioletthärtende Schicht (22) einen ultravioletthärtenden Polymer umfaßt, der ein Mitglied ausgewählt aus der Gruppe bestehend aus Acrylepoxidpolymer, Acrylpolyesterpolymer, Acrylurethanpolymer, Acrylpolyetherpolymer, Acrylpolythiolpolymer und Epoxypolymer ist.

7. Dichtung nach einem der voranstehenden Ansprüche 1-6, **dadurch gekennzeichnet,** daß die ultravioletthärtende Schicht (21) geeignete Zusätze, wie beispielsweise Siliciumdioxid, Haftvermittler und Farbmittel umfaßt.

8. Dichtung nach Anspruch 7, **dadurch gekennzeichnet,** daß das zu verwendete Siliciumdioxid eine mittlere Teilchengröße von nicht mehr als 30 µm, vorzugsweise von nicht mehr als 20 µm und besonders bevorzugt von 0,1-10 µm aufweist und daß das Siliciumdioxid mit einem Anteil von 2-50 Gewichtsteilen und vorzugsweise von 5-30 Gewichtsteilen pro 100 Gewichtsteile an ultravioletthärtendem Polymer zugegeben wird.

9. Dichtung nach Anspruch 7, **dadurch gekennzeichnet,** daß die verwendeten Haftvermittler Silan-Haftvermittler und Titan-Haftvermittler umfassen, die mit einem Anteil von 0,1-10 Gewichtsteilen und vorzugsweise von 0,2-3 Gewichtsteilen pro 100 Gewichtsteile an ultravioletthärtendem Polymer zugegeben werden.

10. Dichtung nach Anspruch 7, **dadurch gekennzeichnet,** daß das Farbmittel mit einem Anteil von 0,01-0,5 Gewichtsteile und vorzugsweise von 0,02-0,2 Gewichtsteilen pro 100 Gewichtsteile an ultravioletthärtendem Polymer zugegeben wird.

## Revendications

1. Joint d'étanchéité comprenant une couche de base de joint d'étanchéité (1) et une couche d'étanchéité (2) disposée sur au moins une partie de la surface de la couche de base de joint d'étanchéité, ladite couche d'étanchéité (2) ayant une structure à plusieurs couches comprenant au moins une couche durcie aux ultraviolets (22) par l'intermédiaire de laquelle elle est fixée à la couche de base de joint d'étanchéité (1) et en outre comprenant une couche de surface (21) dont la surface externe est non collante, ladite couche d'étanchéité ayant une dureté Shore située entre 10 et 80 sur l'échelle A, une compressibilité située entre 10 et 90 % et un taux de récupération non inférieur à 30 %.

2. Joint d'étanchéité selon la revendication 1, dans lequel ladite couche de surface (21) comprend un caoutchouc de silicone.

3. Joint d'étanchéité selon la revendication 1, dans lequel ladite couche de surface (21) comprend une poudre minérale facilitant le détachement.

4. Joint d'étanchéité selon la revendication 1, dans lequel ladite couche de surface (21) est une couche durcie aux ultraviolets.

5. Joint d'étanchéité selon la revendication 1, dans lequel ladite couche de surface (21) est une couche de résine.

6. Joint d'étanchéité selon une quelconque des revendications 1 à 5 qui précèdent, dans lequel ladite couche durcie aux ultraviolets (22) comprend un polymère durcissant aux ultraviolets, qui est un élément choisi dans le groupe constitué par un polymère époxy acrylique, un polymère polyester acrylique, un polymère uréthanne acrylique, un polymère polyéther acrylique, un polymère polythiol acrylique et un polymère époxy.

7. Joint d'étanchéité selon une quelconque des revendications 1 à 6 qui précédent, dans lequel ladite couche durcissant aux ultraviolets (21) comprend des additifs appropriés, comme de la silice, des agents de couplage et des colorants.

8. Joint d'étanchéité selon la revendication 7, dans lequel la silice à utiliser a une granulométrie ne dépassant pas 30 µm, plus préférablement ne dépassant pas 20 µm et le plus préférablement située entre 0,1 et 10 µm, ladite silice étant ajoutée en une quantité de 2 à 50 parties en masse, et de préférence de 5 à 30 parties en masse, pour 100 parties en masse de polymère durcissant aux ultraviolets.

9. Joint d'étanchéité selon la revendication 7, dans lequel les agents de couplage à utiliser incluent les agents de couplage à base de silane et les agents de couplage à base de titane ajoutés en une quantité située entre 0,1 et 10 parties en masse, et de préférence entre 0,2 et 3 parties en masse, pour 100 parties en masse de polymère durcissant aux ultraviolets.

10. Joint d'étanchéité selon la revendication 7, dans lequel le colorant est ajouté en une quantité située entre 0,01 et 0,5 partie en masse, et de préférence entre 0,02 et 0,2 partie en masse, pour 100 parties en masse de polymère durcissant aux ultraviolets.
